(19) Europäisches Patentamt
European Patent Office
Office européen des brevets

(11) Numéro de publication: **0 158 592**
**B1**

# (12) FASCICULE DE BREVET EUROPEEN

(45) Date de publication du fascicule du brevet: **18.01.89**

(51) Int. Cl.⁴: **C 03 C 13/04**, C 07 C 21/00, C 03 C 23/00, C 03 C 3/083

(21) Numéro de dépôt: **85810088.6**

(22) Date de dépôt: **04.03.85**

## (54) Verres optiques aluminosilicatés.

(30) Priorité: **07.03.84 CH 1131/84**

(43) Date de publication de la demande: **16.10.85 Bulletin 85/42**

(45) Mention de la délivrance du brevet: **18.01.89 Bulletin 89/3**

(84) Etats contractants désignés: **AT BE CH DE FR GB IT LI LU NL SE**

(56) Documents cités:
**DE-A-3 137 045**
**FR-A-2 175 934**
**GB-A-2 127 010**

**CHEMICAL ABSTRACTS, vol. 99, no. 14, 3 octobre 1983, page 257, no. 109518, Columbus, Ohio, US; R. JHUN et al.: "Preparation of aluminum silicate (Al7O3.2SIO2) glass by the sol-gel process" & YO OP HOE CHI, 1983, 20(1), 3-12**

(73) Titulaire: **BATTELLE MEMORIAL INSTITUTE, 7 route de Drize, CH-1227 Carouge/Genève (CH)**

(72) Inventeur: **Gonzales-Oliver, Carlos, 5, rue Pré-Jérôme, App. 41, CH-1205 Geneve (CH)**

(74) Mandataire: **Dousse, Blasco et al, 7, route de Drize, CH-1227 Carouge/Genève (CH)**

**EP 0 158 592 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention a pour objet des verres optiques aluminosilicatés homogènes contenant au moins un oxyde d'un métal modificateur monovalent choisi parmi Tl et Ag. Ces verres, qui peuvent contenir, en plus, du cesium, sont caractérisés par leur composition qui comprend, en moles %, 60 à 95 de silice, au moins 2 d'alumine et au moins 2 d'un oxyde ou des oxydes des métaux susmentionnés. Suivant une variante, les proportions molaires d'$Al_2O_3$ et d'oxydes de métaux modificateurs sont supérieures à 3, la proportion de $SiO_2$ étant inférieure à 94%.

De tels verres sont particulièrement utiles dans le domaine des guides d'onde pour transmissions optiques car ils possèdent la faculté, dans certaines conditions, d'échanger le cation du métal monovalent avec un cation étranger, cette opération se traduisant par un changement, dans le verre ainsi traité, de l'indice de réfraction. Par guides d'ondes on entend, par exemple, aussi bien les microlentilles coiffant les fibres optiques et servant à injecter des signaux lumineux dans celles-ci que les fibres elles-mêmes.

On sait que, récemment, de nombreuses études ont été entreprises pour développer des verres optiques à indice de réfraction variable permettant de fabriquer des microlentilles et des fibres optiques à faible perte de transmission. En effet, lorsque dans une fibre optique l'indice décroit radialement du centre vers l'extérieur selon une loi déterminée, les signaux transmis ne subissent qu'un affaiblissement et un déphasage minimaux. Pour que de telles conditions soient remplies, la variation de l'indice suit, de préférence, une loi telle que $n = n_o(1-ar^2)$ ou $n_o$ est l'indice au centre de la fibre de rayon r et a est une constante liée au type de verre utilisé.

Pour réaliser un guide d'onde possédant de telles propriétés, on part généralement d'un verre d'indice homogène auquel on donne une forme appropriée (barreau, par exemple, qu'on pourra ultérieurement mouler en forme de microlentille ou étirer en forme de fibre) et dont la composition comprend un ou plusieurs métaux susceptibles de diffuser vers l'extérieur et d'être remplacés, progressivement, par un autre métal dont la présence se traduit par un indice de réfraction différent de celui du verre de base. Les études ont en effet montré que l'influence sur l'indice de réfraction de la présence d'un métal dans un verre donné est liée au quotient de la polarisabilité électronique (Å) par le rayon ionique (Å3) de ce métal, ce quotient étant relativement bas pour certains métaux dont l'influence sur l'indice de réfraction est faible, par exemple des métaux alcalins et alcalino-terreux (0,06 pour Li; 0,56 pour K; 0,2 pour Mg) mais nettement plus élevé pour des métaux tels que le cesium (0,744), le thallium (1,572) et l'argent, l'influence des oxydes de ces métaux sur l'indice de réfraction étant nettement plus significative. Or, si on place un barreau de verre contenant des proportions convenables de tels métaux de poids moléculaire relativement élevé dans des conditions appropriées, par exemple dans un bain de sel fondu à une température suffisante pour promouvoir une migration de ces métaux sous forme cationique (température de l'ordre de 400–800 °C), il se produit un échange de ceux-ci par le ou les métaux contenus dans le bain de sel fondu. Si ce bain de sel contient des cations pour lesquels le rapport Å/Å$^3$ est inférieur au rapport correspondant du métal contenu dans le verre soumis à l'échange, son introduction conduira à un abaissement de l'indice du verre, abaissement dont l'étendue est fonction du degré de cet échange dans la zone considérée. Le taux de diffusion diminuant progressivement au fur et à mesure qu'on s'éloigne de la périphérie en direction du centre du barreau, la variation d'indice consécutive suivra une fonction semblable, celle-ci, allant en croissant en direction du centre, se rapprochant plus ou moins de la loi idéale précitée suivant la nature de verre, celle du milieu de diffusion et les conditions opératoires.

On trouvera des renseignements détaillés sur ces questions dans les documents suivants: Glass Technology (1979), 20(5), 166–9; Applied Optics (1980), 19(7), 1092–95; Thin Solid Films (1976), 36(2), 493–6; Applied Physics (1975), 6(2), 223–8; Journal of the American Ceramic Society 54 (7), 321–26 (1971); Japan Society of Applied Physics 39 (1970), 63–70; FR-A-2 488 413; FR-A-2 169 860; US-A-3 853 673; US-A-3 873 408; US-A-3 859 103; DE-A-3 008 656; GB-A-2 084 990; JP-A-8 242 547 (CA 97 42 991); JP-A-8 256 353 (CA 97 77 452); JP-A-8 144 023 (CA 96 204 305).

Par ailleurs, il est décrit dans J. of the American Ceramic Society Septembre 1972, p. 483, des verres contenant de 65 à 90 mole % de $SiO_2$, 5–25 mole % d'$Al_2O_3$ et 5–20 mole % de CsO. Ces verres sont obtenus par fusion des oxydes ce qui constitue une technique difficilement applicable pour l'obtention de verre de grande homogénéité en raison de leur viscosité élevée à chaud.

Le document publié dans Chemical Abstracts CA 100: 90 266 b (1984) décrit la fabrication de verres photochromiques contenant des halogénures d'argent comme photochrome. Ces verres sont bien distincts des verres de l'invention où l'argent se trouve sous forme d'oxyde, partie intégrante du verre dans lequel il est incorporé.

Le document CA 97, 77 460 k (1982) décrit le dopage avec gradient de concentration de verres aluminosilicatés par des sels de Pb, Cs ou Tl. Il ne s'agit pas là de verres de composition homogène tels que ceux de l'invention.

Dans le document DE-A-3 137 045, on décrit la gélification d'une solution aqueuse de sulfate de soude et d'alumine par acidification, puis la transformation de ce gel, par lavage et neutralisation en une masse poreuse alumino-siloxanique hydratée. Cette masse est ensuite imprégnée d'une solution aqueuse contenant $Cs_2O$ ou $Tl_2O$ comme dopants, ceux-ci étant ensuite éliminés par diffusion dans un solvant approprié jusqu'à obtention d'un gradient de concentration. La masse est ensuite densifiée par la chaleur de manière à fournir un verre optique à indice de réfraction variable.

Le document FR-A-2 175 934 décrit la fabrication de préformes de verre étirables à indice de réfraction variable par échange ionique dans un bain de sel fondu. Parmi les verres utilisés comme matières de départ pour un tel échange, on cite des verres borosilicatés contenant du césium, du thallium et, éventuellement, de l'alumine. En comparaison, les verres de l'invention ne contiennent pas d'oxyde de bore, ce qui leur confère une stabilité accrue dans les applications relevant des télécommunications.

On a en effet découvert avec surprise que des barreaux obtenus à partir des verres aluminosilicatés sans bore de l'invention riches en oxydes de thallium ou argent et pouvant contenir, en plus, du césium, fournissaient, après échange de ces métaux contre un métal alcalin tel que le sodium, le lithium ou le potassium dans un bain de sel fondu, dans des conditions opératoires relativement aisées à contrôler, des préformes dont l'indice de réfraction varie d'une façon plus prononcée qu'avec les verres optiques habituels (les différences d'indice entre le centre et la périphérie peuvent en effet atteindre de 1 à 15%) et ceci, suivant une fonction radiale se rapprochant de façon inattendue de la loi idéale de l'inverse du carré du rayon (parabole). Par ailleurs, ces préformes se laissent bien mouler ou étirer en fibres optiques par les moyens habituels, la qualité de celles-ci étant excellente en raison de la faible tendance à la microfissuration des verres de l'invention. Finalement, l'existence dans les présents verres de proportions élevées à la fois d'alumine et du ou des métaux diffusables conduit à une structure ouverte favorisant un échange cationique très rapide et donc une économie d'énergie de traitement.

De préférence, les verres de l'invention contiennent de 2 à 20 moles % d'$Al_2O_3$ et de 2 à 20 moles % d'oxydes de Tl, Cs ou Ag, l'argent et le thallium pouvant intervenir individuellement et le césium en mélange avec l'un, l'autre ou les 2 métaux précédents. Ces limites ne sont cependant pas obligatoires et peuvent être outrepassées dans certains cas spéciaux. Ainsi, en variante, on peut avoir les compositions pondérales suivantes exprimées dans l'ordre $SiO_2$%; $Al_2O_3$; oxydes de Tl ou Ag ou mélanges de ceux-ci, sans ou avec du césium: 60–85; 5–20 ou 50–80; 10–25; 10–25. Bien entendu, les proportions molaires d'$Al_2O_3$ et des métaux modificateurs ne sont pas nécessairement égales, l'excès de l'un pouvant compenser un manque de l'autre.

Pour préparer les verres de l'invention, on a de préférence recours au procédé dit «Sol-gel» décrit, par exemple dans les références suivantes: J. Mat. Sciences 13 (1978), 865–70; GB-A-2 084 990. Ce procédé consiste à préparer un mélange des ingrédients métalliques sous forme de certains de leurs composés organiques (de préférence des alcoxydes inférieurs) dans un solvant hydrophile approprié et, par hydrolyse contrôlée de ces composés et lente évaporation des solvants, de réaliser une transformation progressive du mélange en un gel de consistance suffisamment ferme pour être manipulé. On sèche ensuite ce gel et, par chauffage à une température relativement peu élevée (900–1200 °C) on lui fait subir une sorte de frittage ou densification en un verre homogène et exceptionnellement pur. Cette technique est particulièrement appropriée aux verres de l'invention (températures de densification relativement basses) car les oxides de Tl, Cs et Ag sont très volatils aux températures normalement appliquées lors de la mise en œuvre des procédés habituels de fusion (1500 °C ou plus) et, dans de tels cas, les pertes en de tels oxydes seraient considérables et incompatibles avec une fabrication économique.

Par ailleurs, on notera que le procédé sol-gel offre l'avantage majeur de permettre un dopage supplémentaire en thallium, césium ou argent en intervenant aux stades précédant la densification finale où la structure passe de l'état poreux et translucide à celui de verre parfaitement transparent. En effet, aux stades préliminaires où le matériau issu de la gélification de la solution d'alcoxydes est à l'état de gel rigide plus ou moins condensé (suivant les températures de séchage et de densification auxquelles il a déjà été soumis) sa porosité lui permet d'absorber dans ses vides interstitiels une dose supplémentaire de métaux de dopage (par exemple fournis par un bain de sels fondus dans lequel on trempe la préforme poreuse pendant un temps donné). En ce qui concerne le temps nécessaire à cette opération, on peut soit prévoir un temps et une température suffisants pour que l'ajout de métal supplémentaire soit distribué de façon homogène dans la masse poreuse, soit un temps inférieur, auquel cas cet ajout sera distribué suivant un gradient de concentration. Bien entendu, après adjonction de cet apport supplémentaire de métal, la masse est à nouveau chauffée à une température suffisante pour assurer une densification et la vitrification définitive.

On notera, en outre, que des considérations similaires s'appliquent en ce qui concerne l'échange final des métaux monovalents modificateurs tels que Tl, Cs ou Ag par des métaux alcalins ou alcalino-terreux, échange permettant de réaliser un verre à indice de réfraction variable décroissant radialement du centre vers sa périphérie. En effet, on peut aussi bien réaliser un tel échange sur la préforme entièrement vitrifiée et densifiée (comme décrit plus haut) que sur le verre encore à l'état opalescent et poreux, c'est-à-dire au stade précédant sa vitrification finale entre environ 900 et 1200 °C. Dans un tel cas, l'échange peut se faire avec une plus grande rapidité que dans le cas du verre terminé du fait que les phénomènes de diffusion sont plus rapides dans une structure poreuse que dans une structure non poreuse. Bien entendu, si l'échange est effectué à ce stade préliminaire, on complète ensuite la fabrication de la préforme par une étape de chauffage aboutissant à la coalescence complète du verre, celui-ci possédant alors directement un gradiant d'indice de réfraction convenant à la fabrication des microlentilles ou des fibres optiques.

Les Exemples suivants illustrent l'invention.

Pour la compréhension de ceux-ci, on se référera au dessin où on a représenté le profil radial de la variation des taux de Cs et K dans une section droite d'un barreau constitué du verre de l'exemple 2.

Exemple 1

On a préparé trois solutions A, B et C en mélangeant les ingrédients suivants;

| | | |
|---|---|---|
| A: | Silicate d'éthyle ($Si(OEt)_4$) | 46,5 g |
| | Ethanol (EtOH) | 30 g |
| B: | Complexe ester acétylacétique-dibutylaluminium ($AlBu_2AA$) | 11,9 g |
| | Isopropanol (iPrOH) | 10 g |
| | Acétylacétone (AcAc) | 0,6 g |
| C: | Perchlorate d'argent ($AgClO_4$) | 8,2 g |
| | EtOH | 20 g |
| | Toluène | 30 g |
| | Benzène | 10 g |

On a mélangé les solutions A et B puis, à ce premier mélange, on a ajouté la solution C. On a obtenu ainsi une solution de base (SAA) contenant les pourcents en poids suivants des divers ingrédients: EtOH 29,9; $Si(OEt)_4$ 27,8; iPrOH 6; 2,4-pentanedione 0,4; $AlBu_2AA$ 7,1; $AgClO_4$ 4,9; toluène 17,9; benzène 6,0.

On a ensuite provoqué la gélification de la solution SAA par adjonction de différents mélanges eau-alcool, ces mélanges étant les suivants (v/v):

i = 15% $H_2O$ – 85% EtOH;
ii = 30% $H_2O$ – 70% EtOH;
iii = 60% $H_2O$ – 40% EtOH;
iv = 30% $H_2O$ (contenant 0,2% en poids de polyméthylméthacrylate (PMMA)) – 70% EtOH.

On a ajouté ces solutions i à iv à des portions de la solution SAA et on a abandonné les mélanges ainsi obtenus 2 h à température ambiante de manière que se forme un gel.

Les quantités de chacune des solutions i à iv ajoutées à des portions de la solution SAA figurent au Tableau I ci-dessous.

Tableau I

| Essai No. | Solution SAA (ml) | Solution i à iv (ml) |
|---|---|---|
| a | 50 | i 50 |
| b | 40 | i 60 |
| c | 33,3 | i 66,6 |
| d | 25 | i 75,0 |
| e | 50 | ii 50 |
| f | 40 | ii 60 |
| g | 33,3 | ii 66,6 |
| h | 66,6 | iii 33,3 |
| i | 50 | iv 50 |
| j | 40 | iv 60 |

Les gels ci-dessus ont été obtenus dans des récipients cylindriques en verre de borosilicate de dimensions appropriées pour fournir, après démoulage, des cylindres de gel d'environ 10–20 cm de long et d'environ 2 cm de diamètre. On a séché ces cylindres 240 h à l'air dans une étuve portée à 60–80 °C jusqu'à obtenir une matière translucide, dure et rigide. Puis on a sélectionné les échantillons e et j et on les a soumis aux opérations de chauffage suivants dans un courant d'oxygène:

1. de 20° à 600 °C au taux de 1°/min puis 4 hrs à 600 °C;
2. de 600 à 800 °C au taux de 1°/min puis 4 hrs à 800 °C;
3. de 800 à 980 °C au taux de 1°/min puis 1 hr à 980 °C;
4. Refroidissement à 900 °C, chauffage jusqu'à 1030 °C au taux de 5°/min et, finalement, maintien 1 h à cette dernière température. On a ainsi obtenu un barreau de verre monolithique, transparent et homogène de propriétés suivantes:

Analyse (en poids): $SiO_2$ (67,1%); $Al_2O_3$ (10%); $Ag_2O$ (22,8%)
(mole %) : $SiO_2$ (85); $Al_2O_3$ (7,5); $Ag_2O$ (7,5)

Densité: 2,7; Index de réfraction (n) = 1,51.

Exemple 2

On a procédé de manière analogue à ce qui est décrit à l'Exemple 1 et mélangé une solution de $Si(OEt)_4$ dans l'alcool absolu avec une solution contenant un complexe ester acétylacétique-di-(sec)butylate d'aluminium $Al(s.BuO)_2AA$ dissous dans l'isopropanol et l'acétylacétone, avec une solution d'éthylate de césium (CsOEt) dans l'éthanol absolu, et avec une solution de TlOEt dans l'éthanol absolu, le tout de manière à réaliser un mélange homogène (SAC2) de composition pondérale suivante en %: EtOH 43,50; $Si(OEt)_4$ 26,46; iPrOH 14,5; acétylacétone 0,3; $Al(s.BuO)_2AA$ 9,59; CsOEt 4,27; Tl 1,50.

Pour effectuer la gélification, on a ajouté à 40 ml de la solution ci-dessus un mélange constitué de 4,5 g $H_2O$, 4,1 g de solution d'ammoniaque à 0,2 N et 50,7 g d'alcool. De manière générale, on a constaté que par addition à la solution des alcoxydes SAC2 d'environ 6 moles d'$H_2O$ et 0,01 moles de $NH_4OH$ par mole d'alcoxydes on obtenait des gels utilisables à partir de la solution SAC2.

Dans le cas présent, on a obtenu un tel gel après 2 jours à température ordinaire. On a séché ce gel comme à l'Exemple 1, puis en faisant passer la température lentement de 40 à 100 °C en une semaine environ. Puis après avoir retiré le gel sec et dur de l'étuve, on lui a fait subir le traitement thermique suivant:

1. de 20 °C à 600 °C, à 3°/min, puis 4 hrs à cette température;
2. de 600° à 800 °C, à 1°/min, puis 4 hrs à 800 °C;
3. de 800 à 1030 °C, à 1°/min, puis 1 hr à 1030 °C;
4. de 1030 à 1050 °C, à 1°/min, puis 1 hr à 1050 °C.

Finalement, on a chauffé le barreau ½ h à 1200 °C sous un courant d'hélium ce qui a fourni un échantillon de verre transparent sans fissures de composition suivante:

% en poids: $SiO_2$ 53,8; $Al_2O_3$ 11,4; $Cs_2O$ 25,3; $Tl_2O$ 9,5
mole %: $SiO_2$ 80; $Al_2O_3$ 10; $Cs_2O$ 8; $Tl_2O$ 2
Densité: 2,8; n = 1,50

Exemple 3

On a ajouté 0,25 ml d'eau dans 4,75 ml d'EtOH à 40 ml de la solution SAC2. Il est à noter que, comparativement à l'Exemple 2, la quantité d'eau utilisée maintenant n'est que le ⅛ de ce qu'elle était à l'Exemple 2 pour provoquer la gélification. Puis, on a ajouté 0,15 ml de HCl 0,5 N et on a laissé le mélange au repos 2 jours pendant lesquels le gel s'est formé.

Après démoulage et séchage 14 jours à 68 °C dans les conditions décrites aux Exemples précédents, on a fait subir aux échantillons l'un ou l'autre des traitements thermiques suivants:

I. 1. 25–650 °C à 1°/min; 2 hrs à 650 °C
2. 650–930 °C à 1°/min; 5 hrs à 930 °C
II. 1. 25–450 °C à 1°/min; 30 hrs à 450 °C
2. 450–750 °C à 1°/min; 10 hrs à 750 °C
3. 750–920 °C à 1°/min; 2 hrs à 920 °C
III. 1. 25–650 °C à 2°/min; 2 hrs à 650 °C
2. 650–850 °C à 1°/min; 6 hrs à 850 °C
3. 850–1030 °C à 1°/min; 2 hrs à 1030 °C

Les échantillons soumis au traitement thermique I ci-dessus ont fourni un verre transparent mais fortement fissuré en se pulvérisant en particules au choc. Les échantillons résultant des traitements II et III étaient également fissurés et d'aspect opalescent (non transparent) cet aspect étant probablement causé par une cristallisation superficielle du verre. On n'a pas constaté le phénomène de «bloating», c'est-à-dire de gonflement de la matière ou de formation de bulles consécutives au dégagement des vapeurs des produits volatils.

On a rempli un moule de frittage sous pression des particules («crumbs») de verre résultant du bris d'un échantillon soumis au traitement II ci-dessus et on l'a soumis à un pressage de 4 t/cm$^2$ à 1200 °C pendant 60 min. On a obtenu ainsi des préformes similaires à celles de l'Exemple 2, la température utilisée pour le frittage, nettement inférieure à la température normale de fusion du verre, étant insuffisante pour causer la volatilisation d'une quantité notable d'oxyde de césium et d'oxyde de thallium.

Exemple 4

On a procédé comme à l'Exemple 1 et préparé les solutions suivantes D, E et F à partir des ingrédients suivants (la solution F d'éthylate de thallium a été réalisée en dissolvant avec forte agitation cet organométallique dans l'isopropanol et le butanol sous azote sec en présence de $P_2O_5$ dans une boîte à gants. Lors de l'adjonction, des cristaux se sont formés qui se sont, peu à peu redissous).

| | | |
|---|---|---|
| D. | $Si(OEt)_4$ | 190,42 g |
| | EtOH | 203,87 g |
| E. | $AlBu_2AA$ | 48,76 g |
| | AcAc | 2,095 g |
| | iPrOH | 113,17 g |
| F. | TlOEt | 40,24 g |
| | BuOH | 75,0 g |
| | iPrOH | 40,0 g |

Par addition successive des solutions E et F à la solution D, on a obtenu un mélange (SAT4) contenant les proportions suivantes, en poids, des ingrédients susmentionnés:
EtOH 28,6; $Si(OEt)_4$ 26,7; iPrOH 21,5; BuOH 10,5; acétylacétone 0,3; $AlBU_2AA$ 6,8; TlOEt 5,6.

A 100 ml du mélange SAT4, on a ajouté diverses proportions d'éthanol aqueux 80/20 (v/v) et, après avoir mélangé intimement, on a laissé au repos à température ambiante jusqu'à formation des gels. Les conditions de départ et les résultats sont consignés au Tableau II qui suit:

Tableau II

| Essai | Solution $H_2O$/EtOH (ml) | Temps de gélification (h) |
|---|---|---|
| 1 | 50 | 5,4 |
| 2 | 100 | 4,5 |
| 3 | 150 | 3 |
| 4 | 200 | 3 |

Après démoulage des échantillons de gel, on les a séchés au four pendant 3 jours, la température étant lentement mais régulièrement augmentée jusqu'à 85 °C lors de ce séchage. On a ainsi obtenu des bareaux purs et transparents, légèrement bleutés de gel sec.

On a fait subir à ces échantillons le traitement thermique à l'air suivant:
20–920 °C, 1 °C/min; 2 hrs à 920 °C
920–980 °C, 6 °C/min; 2 hrs à 980 °C

On a ainsi obtenu des échantillons de verre incolore, parfaitement transparents et dépourvus de bulles d'air; quelques traces de fissures étaient présentes, aussi on a préparé d'autres échantillons qu'on a densifié dans les conditions suivantes:
20–800 °C, 1 °C/min; 4 hrs à 800 °C
800–920 °C, 1 °C/min; 5 hrs à 920 °C
920–950 °C, 1 °C/min; 5 hrs à 950 °C

Ces échantillons contenaient 85 moles % de $SiO_2$ et 7,5 moles % de chacun des constituants restants $Al_2O_3$ et $Tl_2O$. Densité 3,2, n = 1,55. Ils ne présentaient aucune fissure.

Exemple 5

En utilisant les méthodes décrites aux Exemples précédents, on a préparé, sous forme de préformes étirables pour fibres optiques, les verres dont la composition figure au Tableau III ci-dessous.

Tableau III

| Echantillon | $SiO_2$ % mole | poids | $Al_2O_3$ % mole | poids | $Cs_2O$ % mole | poids | $Tl_2O$ % mole | poids | $Ag_2O$ % mole | poids |
|---|---|---|---|---|---|---|---|---|---|---|
| 1 | 66,6 | 41,9 | 16,6 | 17,8 | | | | | 16,6 | 40,3 |
| 2 | 66,6 | 31,3 | 16,6 | 13,3 | | | 16,6 | 55,4 | | |
| 3 | 70 | 24,8 | | | | | 30 | 75,2 | | |
| 4 | 70 | 45,7 | 15 | 16,6 | | | | | 15 | 37,7 |
| 5 | 72,8 | 38 | 13,6 | 12 | | | 13,6 | 50 | | |
| 6 | 70 | 34,7 | 15 | 12,6 | | | 15 | 52,6 | | |

L'échantillon 3, sans alumine, a été préparé à des fins de contrôle; son comportement, lors des réactions d'échange cationique décrites ci-après, a été différent de celui des verres de l'invention.

Exemple 6

Conversion des échantillons des exemples précédents en préformes de guides d'ondes à indice de réfraction variable radialement.

On a immergé 5 heures un échantillon du verre préparé suivant l'Exemple 2 (diamètre 3–5 mm) dans un bain de $KNO_3$ fondu et maintenu à 600 °C.

Après avoir retiré l'échantillon du bain, on a constaté par analyse globale de la composition du verre qu'environ 50% (mole %) du césium et du thallium étaient remplacés par le potassium. L'analyse a été effectuée par spectre de dispersion énergétique (rayons X) suivant la technique habituelle. Suivant cette technique, on irradie l'échantillon par un faisceau électronique et les rayons X engendrés par les électrons secondaires sont enregistrés spectralement en fonction de leur énergie (keV). Le diagramme ainsi obtenu met en évidence les pics dus à la présence des différents métaux dans le verre analysé comme décrit ci-dessus, la hauteur de ces pics constituant une évaluation grossière des proportions moyennes relatives des constituants métalliques en présence. On a ainsi pu observer la formation des pics du potassium à 3,313 et 3,589 KeV.

Le dessin annexé représente schématiquement la variation radiale de la hauteur des pics principaux K et Cs lorsqu'on en effectue la même analyse par balayage d'une section droite de l'échantillon de verre, ce balayage s'effectuant suivant une direction reliant la périphérie p au centre c de cette section. On observe une variation analogue en ce qui concerne le thallium. Une mesure correspondante de l'indice de réfraction, fonction de la présence simultanée de Cs, Tl et K, a montré que la variation de celui-ci suit une courbe se rapprochant nettement de la parabole recherchée.

En soumettant les verres obtenus aux essais 1, 2 et 4–6 de l'Exemple 5 à l'échange cationique décrit ci-dessus, on obtient des résultats analogues, les verres contenant de l'argent ayant un comportement particulièrement satisfaisant en ce qui concerne la variation du gradient d'indice de réfraction qui, suivant le degré de l'échange, c'est-à-dire le temps de traitement qu'on peut poursuivre jusqu'à 10–20 heures, peut atteindre 15% entre le centre et la périphérie du barreau.

On a également effectué le traitement d'échange cationique dans un bain de métal fondu d'échantillon de verre préparés suivant les techniques décrites précitées, mais avant densification finale. Ainsi, par exemple, on a soumis à un tel traitement des échantillons de degrés de porosité divers tels qu'obtenus après les stades de chauffage 1., 2. et 3. décrits à l'Exemple 1. Dans de tels cas, après l'opération d'échange en bain de sel fondu, on a procédé à une densification finale du verre telle que correspondant à l'opération de chauffage 4. de l'Exemple 1. Lorsqu'on effectue l'échange cationique avec un barreau de verre encore poreux, cet échange se fait plus rapidement et plus en profondeur qu'avec un verre entièrement densifié. En conséquence, le profil de variation de l'indice de réfraction entre la périphérie et le centre du barreau peut s'éloigner de la courbe idéale, si le traitement est trop prolongé ou si la température est trop élevée. La mise au point des conditions exactes pour obtenir une courbe de profil déterminée est effectuée facilement de cas en cas par des essais de routine.

**Revendications**

1. Verres optiques aluminosilicatés homogènes sans oxyde de bore, caractérisés par le fait qu'ils contiennent 60–95 moles % de silice, au moins 2 moles % d'alumine, le restant étant constitué par au moins un des oxydes des métaux modificateurs suivants: Ag, Tl.

2. Verres suivant la revendication 1, caractérisés par le fait que les métaux modificateurs comprennent, en addition, le cesium.

3. Verres suivant les revendications 1 ou 2, caractérisés par le fait que la proportion d'alumine est de 2 à 20 moles % et la proportion d'oxydes des métaux modificateurs est de 3 à 20 Moles %.

4. Procédé pour la préparation, au moyen des verres suivant les revendications 1 à 3, de préformes de guides d'onde optiques à indice de réfraction variable, caractérisé par le fait qu'on procède à l'échange partiel, par diffusion dans le verre, de l'un des métaux modificateurs par un ou plusieurs cations métalliques étrangers.

5. Procédé suivant la revendication 4, caractérisé par le fait que l'échange est effectué par immersion d'un barreau de verre cylindrique dans

un sel fondu contenant un tel cation étranger, notamment le sodium, le lithium ou le potassium.

6. Procédé suivant les revendications 4 ou 5, caractérisé par le fait qu'on procède à un tel échange, le verre ayant encore une structure poreuse, celle-ci résultant de la gélification, par action de l'eau, d'un mélange d'alcoxydes métalliques et du durcissement de ce gel par séchage et traitement à la chaleur, puis qu'après cet échange, on coalesce la masse en un verre transparent par ultime traitement thermique.

7. Procédé suivant la revendication 6, caractérisé par le fait que ce traitement thermique se fait à une température d'environ 900 à 1400 °C.

8. Procédé de fabrication des verres suivant les revendications 1 à 3, caractérisé par le fait qu'on traite un mélange des alcoxydes inférieurs de Si, Al et des métaux modificateurs Ag, Cs et Tl par de l'eau de façon à réaliser un gel monolithique de ce mélange, qu'on sèche celui-ci et qu'on le transforme progressivement par la chaleur en une masse peu à peu plus compacte, d'abord poreuse et opalescente, puis finalement entièrement densifiée, vitrifiée et transparente et de très grande pureté.

9. Procédé suivant la revendication 8, caractérisé par le fait que lorsque la masse est poreuse et opalescente, on la traite dans un bain de sels métalliques fondus afin de la doper en oxydes de tels métaux.

10. Procédé suivant la revendication 9, caractérisé par le fait que ces sels métalliques sont des sels d'Ag, de Tl ou de Cs, l'opération résultant en une augmentation du taux de ce métal modificateur déjà présent dans la masse.

11. Procédé suivant la revendication 9, caractérisé par le fait que la porosité de la masse est d'au moins 20% (v/v).

12. Préforme optique obtenue suivant le procédé des revendications 4 et 5 utilisable pour la fabrication de microlentilles ou, par étirage à chaud, de fibres optiques, caractérisée par le fait qu'elle présente un indice de réfraction variable radialement, la différence d'indice entre le centre du guide et sa périphérie atteignant 1 à 15%.

**Claims**

1. Homogeneous aluminosilicate optical glasses without boron oxide, characterised in that they contain 60–95 mols % silica and at least 2 mols alumina, the remainder being made up by at least one oxide of the following modifying metals: Ag and Tl.

2. Glasses according to claim 1, characterised in that the modifying metals also comprise cesium.

3. Glasses according to claims 1 or 2, characterised in that the proportion of alumina is 2 to 20 mols % and the proportion of modifying metal oxides is 3–20 mols %.

4. A method for the preparation, by means of glasses according to claims 1 to 3, of optical waveguide preforms having a variable refractive index, characterised in that one of the modifying metals is partly exchanged for one or more foreign metal cations by diffusion in the glass.

5. Method according to claim 4, characterised in that the exchange is brought about by immersing a cylindrical glass rod in a molten salt containing an aforementioned foreign cation, inter alia sodium, lithium or potassium.

6. Method according to claims 4 or 5, characterised in that the exchange is brought about while the glass still has a porous structure resulting from gelification, by action of water, of a mixture of metal alkoxides and hardening of the gel by drying and heat-treatment, and after the exchange the material is coalesced into a transparent glass by subsequent heat-treatment.

7. Method according to claim 6, characterised in that the heat-treatment is carried out at a temperature of approximately 900 to 1400 °C.

8. A method of manufacturing glasses according to claims 1–3, characterised in that a mixture of lower alkoxides of Si, Al and the modifying metals Ag, Cs and Tl is treated with water to obtain a monolithic gel of the mixture, the gel is dried and progressively converted by heating into a material which gradually becomes more compact, being at first porous and opalescent whereas finally it is completely densified, vitrified and transparent and of very high purity.

9. Method according to claim 8, characterised in that when the material is porous and opalescent, it is processed in a bath of molten metal salts in order to dope it with oxides of the said metals.

10. Method according to claim 9, characterised in that the metal salts are salts of Ag, Tl or Cs, the operation resulting in an increase in the proportion of the modifying metal, which is already present in the material.

11. Method according to claim 9, characterised in that the porosity of the material is at least 20% (v/v).

12. An optical preform obtained according to the method of claim 4 and 5, of use for manufacturing micro-lenses or for hot-drawing into optical fibres, characterised in that it has a refractive index which varies radially, the difference between the index at the centre and the periphery of the guide being from 1 to 15%.

**Patentansprüche**

1. Homogene, optische Aluminosilikatgläser ohne Gehalt an Boroxid, dadurch gekennzeichnet, dass sie 60 bis 95 Mol-% Siliciumdioxid und mindestens 2 Mol-% Aluminiumoxid enthalten, wobei der Rest sich aus mindestens einem modifizierenden Oxid eines Metalls der Gruppe Ag und Tl zusammensetzt.

2. Gläser nach Anspruch 1, dadurch gekennzeichnet, dass die modifizierenden Metalle ausserdem aus Cäsium bestehen.

3. Gläser nach den Ansprüchen 1 oder 2, dadurch gekennzeichnet, dass der Anteil an Aluminiumoxid 2 bis 20 Mol-% und der Anteil an modifizierenden Metalloxiden 3 bis 20 Mol-% beträgt.

4. Verfahren zur Herstellung von Vorformlingen für Leiter optischer Wellen mit variablem Brechungsindex mit Hilfe der Gläser nach den Ansprüchen 1 bis 3, dadurch gekennzeichnet, dass man in dem Glas einen teilweisen Austausch des einen modifizierenden Metalls durch ein oder mehrere fremde Metallkationen vornimmt.

5. Verfahren nach Anspruch 4, dadurch gekennzeichnet, dass der Austausch durch Eintauchen eines zylindrischen Glasstabes in eine Salzschmelze vorgenommen wird, die ein solches Fremdkation, insbesondere Natrium, Lithium oder Kalium, enthält.

6. Verfahren nach Anspruch 4 oder 5, dadurch gekennzeichnet, dass man für einen solchen Austausch das Glas, das ausserdem eine poröse Struktur aufweist, die von dem Gelieren herrührt, durch Einwirkung von Wasser, eines Gemisches von Metallalkoxiden und Aushärten des Gels durch Trocknen und Behandeln in der Wärme behandelt, dann nach diesem Austausch die Masse durch eine letzte Wärmebehandlung in ein durchsichtiges Glas überführt.

7. Verfahren nach Anspruch 6, dadurch gekennzeichnet, dass diese Wärmebehandlung bei einer Umgebungstemperatur von 900 bis 1400 °C durchgeführt wird.

8. Verfahren zur Herstellung von Gläsern nach den Ansprüchen 1 bis 3, dadurch gekennzeichnet, dass man ein Gemisch niederer Alkoxide von Si, Al und den modifizierenden Metallen Ag, Cs und Tl mit Wasser behandelt, um aus diesem Gemisch ein monolithisches Gel zu erhalten, dass man dieses trocknet und es nach und nach durch Wärme in eine allmählich kompakter werdende Masse überführt, die anfangs porös und milchig und dann schliesslich völlig verfestigt, glasig und durchsichtig sowie von höchster Reinheit ist.

9. Verfahren nach Anspruch 8, dadurch gekennzeichnet, dass man die Masse, wenn sie porös und milchig ist, in einem Metallschmelzebad behandelt, um in den Oxiden der Metalle Dotierungen zu bewirken.

10. Verfahren nach Anspruch 9, dadurch gekennzeichnet, dass die Metallsalze Salze von Ag, Tl oder Cs sind, wobei der Vorgang zu einer Erhöhung des Gehaltes an bereits in der Masse vorhandenem modifizierendem Metall führt.

11. Verfahren nach Anspruch 9, dadurch gekennzeichnet, dass die Porosität der Masse mindestens 20% (Vol./Vol.) beträgt.

12. Optischer Vorformling, der nach dem Verfahren der Ansprüche 4 und 5 erhalten und zur Herstellung von Mikrolinsen oder, nach Verstrekken in der Wärme, von optischen Fasern verwendbar ist, dadurch gekennzeichnet, dass er einen radial variablen Brechungsindex aufweist, wobei der Unterschied zwischen dem Index im Inneren des Leiters und dem an seiner Peripherie 1 bis 15% beträgt.

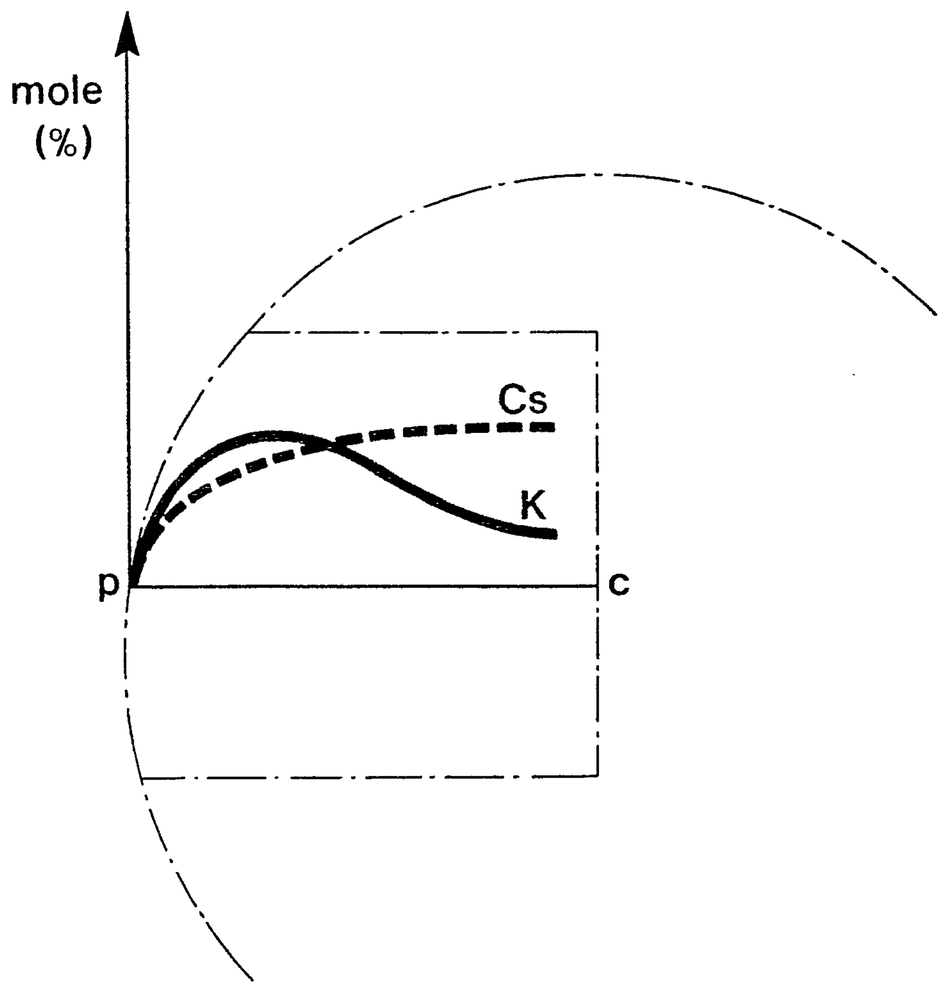
mole
(%)
Cs
K
p
c